# EUROPEAN PATENT SPECIFICATION

(11) **EP 4 525 462 B1**
(45) Date of publication and mention of the grant of the patent: **29.04.2026**
(21) Application number: 22942810.7
(22) Date of filing: 19.05.2022
(51) Int. Cl.: H04N 21/436, H04N 21/4363, H04N 21/442, H04N 21/647, H04N 5/20, H04N 5/57

(54) **WIRELESS RECEPTION DEVICE AND WIRELESS DISPLAY SYSTEM**
DRAHTLOSE EMPFANGSVORRICHTUNG UND DRAHTLOSES ANZEIGESYSTEM
DISPOSITIF DE RÉCEPTION SANS FIL ET SYSTÈME D'AFFICHAGE SANS FIL

(43) Date of publication of application: 19.03.2025
(73) Proprietor: LG Electronics Inc., Yeongdeungpo-gu Seoul 07336 (KR)
(72) Inventor: PARK, Sungwon, Seoul 06772 (KR)
(74) Representative: Schornack, Oliver
(86) International application number: PCT/KR2022/007197
(87) International publication number: WO 2023/224146

(56) References cited:
- WO-A1-2022/045389
- CN-A- 112 951 139
- KR-B1- 0 152 021
- KR-B1- 100 314 297
- KR-B1- 101 644 189
- KR-B1- 101 658 138
- US-A1- 2006 215 044
- US-A1- 2006 245 017
- US-B2- 12 120 330

## Description

### [Technical Field]

The present disclosure relates to a wireless system for transmitting and receiving A/V data wirelessly.

### [Background Art]

Digital TV services using wired or wireless communication networks are becoming widespread. Digital TV services can provide various services that were not available with existing analog broadcasting services.

For example, IPTV (Internet Protocol Television) and smart TV services, which are types of digital TV services, provide interactivity that allows users to actively select the type of program to watch, the viewing time, and the like. Based on this interactivity, IPTV and smart TV services can also provide various additional services, such as Internet search, home shopping, and online games.

Recently, TV services are provided through a wireless system in which an A/V transmission device transmits a compressed A/V (Audio/Video) signal to an A/V reception device through a wireless connection, and the A/V reception device restores and outputs the compressed A/V signal.

In the case of the wireless system, RF (Radio Frequency) communication is performed between the A/V transmission device and the A/V reception device through antennas.

Conventionally, the A/V transmission device transmits average picture level (APL) data to the A/V reception device along with a video frame (or video signal).

However, there are cases where the transmission of APL data is not smooth due to obstacles or signal interference in the network environment between the A/V transmission device and the A/V reception device.

As a result, there is a problem in which the image quality deteriorates, such as flickering, in the A/V reception device because the image frame and the corresponding APL data do not match.

Furthermore, WO 2022/045389 A1 relates to an image reception device having a wireless reception unit to wirelessly receive an image signal from an image transmission device, a content restoration unit configured to decompress the received image signal, a display configured to display an image corresponding to the decompressed image signal, an illuminance sensor configured to measure an ambient brightness at the display, and a microcomputer configured to switch a power mode of the image reception device to a low power mode based on the ambient brightness being less than a preset brightness. US 2006/215044 A1 provides further technical background on wirelessly receiving video signals and a device having an illumination sensor for detecting illumination of an environmental light.

The brightness adjustment is performed based on the quality of the received video.

### [Invention]

### [Technical Problem]

An object of the present disclosure is to generate APL data for an image signal by itself by a wireless reception device, when the wireless reception device cannot receive APL data transmitted by a wireless transmission device due to deterioration or disconnection of the wireless signal of a wireless display system.

Another object of the present disclosure is to calculate APL data for an image frame by a wireless reception device to output a stable image when the transmission of APL data in a wireless display system is not smooth.

### [Technical Solution]

These objects are solved by the present invention as defined in the independent claim. Preferred embodiments are derivable from the dependent claims.

### [Effect of the Invention]

According to an embodiment of the present disclosure, a wireless reception device can display a stable image by generating an APL value on its own even in a situation where the wireless quality is poor.

Accordingly, a viewer can watch the image without feeling inconvenienced even in a situation where the wireless quality is deteriorated.

### [Description of Drawings]

FIGS. 1 and 2 are diagrams describing a configuration of a wireless display system according to an embodiment of the present disclosure.
FIG. 3 is a block diagram illustrating a configuration of a remote control device according to an embodiment of the present disclosure.
FIG. 4 is a ladder diagram for describing an operation method of a wireless system according to an embodiment of the present disclosure.
FIG. 5 is a diagram describing a process in which an A/V reception device obtains an APL value using image data when an abnormal condition in wireless quality is detected according to an embodiment of the present disclosure.
FIG. 6 is a diagram describing a process in which an A/V reception device obtains an APL value using APL data when an abnormal state of the wireless quality is detected according to one embodiment of the present disclosure.
FIG. 7 is a diagram describing a process of transmitting image data and APL data in a wireless display system according to an embodiment of the present disclosure.

### [Best Mode]

The video/audio (hereinafter, A/V) transmission device according to an embodiment of the present disclosure is an intelligent device that adds a computer-assisted function to a broadcast reception function, for example, and while remaining faithful to the broadcast reception function, it may have an Internet function, and the like, and may have a more convenient interface such as a manual input device, a touch screen, or a space remote control.

In addition, the device may perform functions such as email, web browsing, banking, or games by connecting to the Internet and a computer with the support of a wired or wireless Internet function. A standardized general-purpose OS may be used for these various functions.

Therefore, the A/V transmission device described in the present disclosure may perform various user-friendly functions since various applications may be freely added or deleted on, for example, a general-purpose OS kernel.

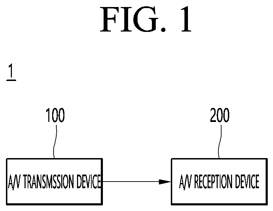

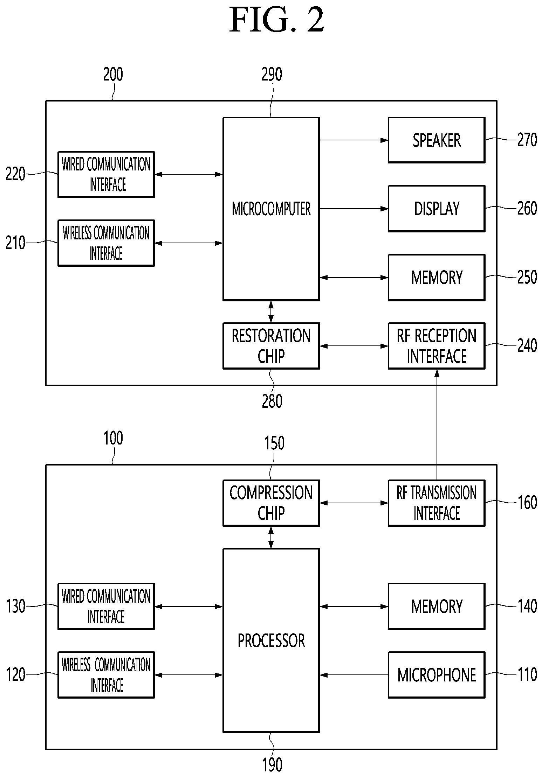

FIGS. 1 and 2 are diagrams describing a configuration of a wireless display system according to an embodiment of the present disclosure.

Referring to FIG. 1, a wireless display system 1 according to an embodiment of the present disclosure includes an A/V transmission device 100 and an A/V reception device 200.

The wireless display system 1 may be a system in which an A/V transmission device 100 wirelessly transmits A/V data to an A/V reception device 200, and the A/V reception device 200 outputs A/V data.

The A/V transmission device 100 may be a device capable of encoding video and audio and wirelessly transmitting encoded content video and audio.

The A/V transmission device 100 may be a set-top box.

The A/V transmission device 100 may be connected to an external device, such as a set-top box or a USB memory. The A/V transmission device 100 may transmit a video signal or audio signal received from a connected external device to the A/V reception device 200.

The A/V reception device 200 may be a display device capable of wirelessly receiving encoded video and audio and performing decoding of the received video and audio.

The A/V transmission device 100 and the A/V reception device 200 may constitute a video wall display system.

In a video wall, having a display with a thin bezel plays an important role in visualizing content images. In order to have a thin bezel of the display, it is efficient to have only components that may play a minimum role, and to perform circuits or components for main functions in a separate device.

The A/V transmission device 100 may determine the type of content image input from the outside, and determine the compression ratio of the content image based on the determined type. The compression ratio of the content image may be defined as the ratio of the size of the image data before encoding and the size of the image data after encoding.

The type of the content image may include a still image type, a general video type, and a game video type.

The A/V transmission device 100 may compress the content image according to the determined compression ratio, and wirelessly transmit the compressed content image to the A/V reception device 200.

The A/V reception device 200 restores the compressed content image received from the A/V transmission device 100 and display the restored content image on the display.

FIG. 2 is a block diagram illustrating the detailed configuration of the A/V transmission device 100 and the A/V reception device 200.

Referring to FIG. 2, the A/V transmission device 100 may include a microphone 110, a wireless communication interface 120, a wired communication interface 130, a memory 140, a compression chip 150, an RF transmission interface 160, and a processor 190.

The microphone 110 may receive an audio signal and transmit the signal to the processor 190.

The microphone 110 may receive a voice spoken by a user.

The wireless communication interface 120 may include one or more of a Wi-Fi module and a Bluetooth module.

The Wi-Fi module may perform wireless communication with an external device or an A/V reception device 200 through the Wi-Fi standard.

The Bluetooth module may perform wireless communication through the Bluetooth Low Energy (BLE) standard.

The Bluetooth module may perform wireless communication with an external device such as a remote control or the A/V reception device 200 through the Bluetooth Low Energy (BLE) standard.

The wireless communication interface 120 may be equipped with a tuner that receives a broadcast signal.

The wired communication interface 130 may be an interface for wired connection with an external device. The wired communication interface 130 may include a plurality of HDMI (High-Definition Multimedia Interface) terminals or USB (Universal Serial Bus) ports.

The wired communication interface 130 may receive a video signal or an audio signal from the external device.

The memory 140 may store a program for signal processing and control, and may store a signal-processed video, voice, or data signal.

The memory 140 may perform a function for temporary storage of an image, voice, or data signal input from the outside, and may store information about a predetermined image through a channel memory function.

The compression chip 150 may compress an image signal or an audio signal input from the outside, and transmit the compressed signal to the RF transmission interface 160.

The compression chip 150 may have an encoder for compressing the image signal or the audio signal.

The RF transmission interface 160 may transmit an A/V signal to an RF reception interface 240 of the A/V reception device 200 through RF Radio Frequency communication.

The RF transmission interface 160 may include one or more antennas.

The RF transmission interface 160 may transmit a compressed A/V signal in digital form to the RF reception interface 240.

The RF transmission interface 160 may transmit an A/V signal to the RF reception interface 240 through one or more channels.

The processor 190 may control the overall operation of the A/V transmission device 100. The processor 190 may be named as a Main System on Chip (Main SoC).

The processor 190 may also include the compression chip 150.

The A/V reception device 200 may include a wireless communication interface 210, a wired communication interface 220, the RF reception interface 240, a memory 250, a display 260, a speaker 270, a restoration chip 280, and a microcomputer 290.

The wireless communication interface 210 may include a Wi-Fi module, a Bluetooth module, and an IR module.

The Wi-Fi module may perform wireless communication through the Wi-Fi standard.

The Wi-Fi module may perform wireless communication with an external device or the A/V transmission device 100 through the Wi-Fi standard.

The Bluetooth module may perform wireless communication through the Bluetooth Low Energy (BLE) standard.

The Bluetooth module may perform wireless communication with an external device such as a remote control or an A/V transmission device 100 through the Bluetooth Low Energy (BLE) standard.

The IR module may receive a signal from a remote controller300 described later through IR Infrared communication.

The wired communication interface 220 may be an interface for wired connection with an external device. The wired communication interface 220 may include a plurality of HDMI (High-Definition Multimedia Interface) terminals or USB (Universal Serial Bus) ports.

The wired communication interface 220 may receive a video signal or an audio signal from an external device.

The RF reception interface 240 may receive a compressed A/V signal from the RF transmission interface 160.

The RF reception interface 240 may include a plurality of antennas. The RF reception interface 240 may be placed at the bottom of the display 260.

The RF reception interface 240 may include a first antenna module and a second antenna module. The first antenna module and the second antenna module may each include a plurality of antennas.

The RF reception interface 240 receives a compressed A/V signal in digital form from the RF transmission interface 160 and may transmit the received A/V signal to the restoration chip 280.

The memory 250 may store a program for signal processing and control and may store a signal-processed image, voice, or data signal.

The display 260 displays an image signal received from the microcomputer 290.

The display 260 may display an image signal according to the operation of a timing controller not shown.

The restoration chip 280 restores the compressed A/V signal received by the RF reception interface 240. To this end, the restoration chip 280 may include a decoder.

The microcomputer 290 may control the overall operation of the A/V reception device 200.

The microcomputer 290 may output a restored image signal through a display 260 and output a restored audio signal through a speaker 270.

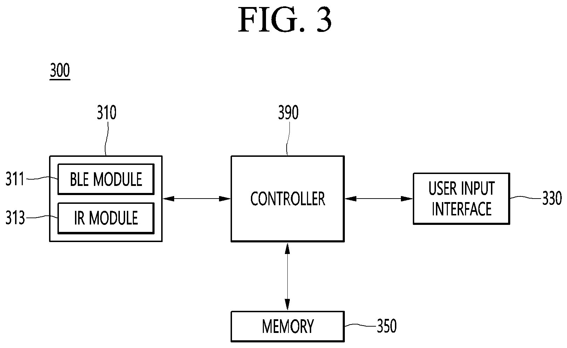

FIG. 3 is a block diagram illustrating a configuration of a remote control device according to an embodiment of the present disclosure.

Referring to FIG. 3, the remote control device 300 may include a wireless communication interface 310, a user input interface 330, a memory 350, and a controller 390.

The wireless communication interface 310 may be an interface for performing wireless communication with the A/V transmission device 100 or the A/V reception device 200.

The wireless communication interface 310 may include a Bluetooth Low Energy (BLE) module 311 and an IR (InfraRed) module 313.

The BLE module 311 may transmit a signal to the A/V transmission device 100 for controlling the operation of the A/V transmission device 100.

The BLE module 311 may transmit a signal to the A/V transmission device 100 to trigger a pairing operation of the A/V transmission device 100.

The user input interface 330 may include a keypad, a button, a touch pad, or a touch screen.

The user input interface 330 may generate a control command for controlling the operation of the A/V transmission device 100 or the A/V reception device 200 according to a user's operation command.

In the case that the user input interface 330 has a hard key button, the user may operate the hard key through a push operation of the hard key button.

The user input interface 330 may have various types of input means that the user may operate, such as a scroll key or a jog key.

The memory 350 may store a program for the operation of the controller 390 and may also temporarily store input/output data.

The controller 390 controls operations related to the application program and, typically, the overall operation of the remote control device 300.

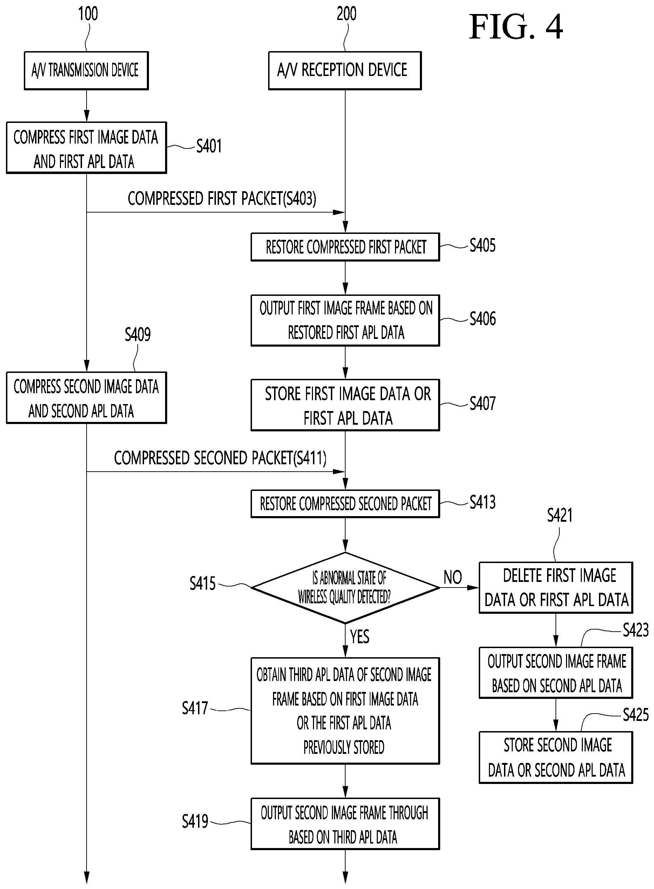

FIG. 4 is a ladder diagram for describing an operation method of a wireless system according to an embodiment of the present disclosure.

Hereinafter, APL data is described as data that is distinct from image data, but is not limited thereto, and may be data included in the image data.

In addition, hereinafter, the format of an image signal transmitted by the A/V transmission device 100 to the A/V reception device 200 may be Vx1.

The processor 190 of the A/V transmission device 100 compresses first image data corresponding to a first image frame and first APL data of the first image data through a compression chip 150 (step S401).

The first APL data may be an APL value of the first image frame to be displayed on the display 260 of the A/V reception device 200. The APL value may be defined as an average of the brightness of each part relative to the maximum brightness of the screen.

The processor 190 may calculate the first APL data based on RGB data of each of a plurality of pixels included in the first image data. For example, the processor 190 may calculate a plurality of brightnesses corresponding to each of the plurality of pixels, and obtain an average value of the plurality of brightnesses as the first APL data.

When transmitting the first image data, the processor 190 may transmit the first APL data including the APL value of the first image data to the A/V reception device 200 together.

The first image frame may be a frame to be displayed on the display 260 of the A/V reception device 200 by the first image data.

The processor 190 of the A/V transmission device 100 compresses the first image data and the first AP data to generate a compressed first packet, and transmits the generated first packet to the A/V reception device 200 through the RF transmission interface 160 (step S403).

The microcomputer 290 of the A/V reception device 200 restores the compressed first packet through the restoration chip 280 (step S405), and outputs the first image frame through the display 260 based on the restored first image data and the first APL data (step S406).

In one embodiment, the display 260 may be an organic light-emitting diode OLED display. The display 260 may include a display panel including a plurality of pixels, and each of the plurality of pixels may include an OLED.

The display 260 may further include a timing controller that controls the operation of a gate driver and a source driver for driving the display panel.

The timing controller may control the operation timing of the gate driver and the source driver to allow the display panel to output an image.

The microcomputer 290 may transmit the first APL data to the timing controller, and the timing controller may generate a current value based on the first APL data and provide the generated current value to the display panel. Accordingly, a first image frame having an APL value indicated by the first APL data may be displayed.

The microcomputer 290 of the A/V reception device 200 stores the first image data or the first APL data corresponding to the first image frame in the memory 250 (step S407).

The microcomputer 290 may store one or more of the first image data or the first APL data corresponding to the first image frame in the memory 250. Here, the first image data stored in the memory 250 may be compressed data for capacity reduction. That is, the memory 250 may store compressed image data rather than restored image data.

The microcomputer 290 may match the first APL data to the first image data and store it in the memory 250.

The microcomputer 290 may store the first image data or the first APL data in the memory 250 only for a predetermined period of time. This will be described later.

The processor 190 of the A/V transmission device 100 compresses the second image data corresponding to the second image frame and the second APL data of the second image frame through the compression chip 150 (step S409).

The processor 190 of the A/V transmission device 100 compresses the second image data and the second AP data to generate a compressed second packet, and transmits the generated second packet to the A/V reception device 200 through the RF transmission interface 160 (step S411).

The microcomputer 290 of the A/V reception device 200 restores the compressed second packet through the restoration chip 280 (step S413).

The microcomputer 290 of the A/V reception device 200 determines whether an abnormal state of wireless quality is detected (step S415).

The state of wireless quality may include a normal state and an abnormal state. The normal state may be a state in which the wireless signal (e.g., a video signal) transmitted from the RF transmission interface 160 to the RF reception interface 240 is not interrupted. The abnormal state may be a state in which the wireless signal transmitted from the RF transmission interface 160 to the RF reception interface 240 is interrupted.

In one embodiment, the microcomputer 290 may detect the abnormal state of wireless quality by measuring a signal-to-noise ratio (SNR).

The SNR may represent a relative ratio of the power of an A/V signal to the power of a noise signal.

The microcomputer 290 may determine that the wireless quality is abnormal in the case that the SNR value is smaller than a reference value. The microcomputer 290 may determine that the wireless quality is normal in the case that the SNR value is greater than or equal to a reference value.

In another embodiment, the microcomputer 290 may detect a state of wireless quality based on a received signal strength indicator (RSSI). The microcomputer 290 may determine the state of wireless quality as normal if the RSSI value is greater than or equal to a preset value.

The microcomputer 290 may determine the state of wireless quality as abnormal in the case that the RSSI value is less than or equal to a preset value.

In one embodiment, the microcomputer 290 may measure the state of wireless quality in accordance with the output cycle of the video frame. For example, in the case that the output cycle of the video frame is 60 fps, the microcomputer 290 may check the wireless quality 60 times per second.

In the case that the microcomputer 290 of the A/V reception device 200 determines that an abnormal state of wireless quality has been detected, the microcomputer obtains the third APL data of the second image frame based on the first image data or the first APL data previously stored in the memory 250 (step S417).

In one embodiment, in the case that the wireless quality is determined to be abnormal, the microcomputer 290 may obtain the first APL data corresponding to the first image frame received before receiving the second image frame as the APL data corresponding to the second image frame.

That is, the microcomputer 290 may obtain the APL value of the first image frame as the APL value of the second image frame. In the case that the wireless quality is not good, the microcomputer 290 may use the APL value of the previous image frame as the APL value of the current image frame.

In another embodiment, in the case that the wireless quality is determined to be abnormal, the microcomputer 290 may obtain the third APL data for the second image frame using the first image data corresponding to the first image frame received before receiving the second image frame.

That is, the microcomputer 290 may obtain the APL value calculated using the first image data as the APL value of the second image frame. This will be described later.

The microcomputer 290 of the A/V reception device 200 outputs the second image frame through the display 260 based on the obtained third APL data (step S419).

The microcomputer 290 transmits the third APL data to the timing controller, and the timing controller may generate a current value based on the third APL data and provide the generated current value to the display panel. Accordingly, the first image frame having the APL value indicated by the third APL data may be displayed on the display 260.

In this way, according to the embodiment of the present disclosure, even when the wireless quality between the A/V transmission device 100 and the A/V reception device 200 is poor, the APL value of the image frame may be generated so that a stable image may be output.

Accordingly, the viewer may not feel inconvenience in watching the image even in a situation where the wireless quality is deteriorated.

Meanwhile, in the case that the microcomputer 290 of the A/V reception device 200 determines that the abnormal state of the wireless quality is not detected, the microcomputer 290 deletes the first image data or the first APL data previously stored from the memory 250 (step S421).

In the case that the microcomputer 290 determines that the state of the wireless quality is normal, the microcomputer 290 may delete one or more of the first image data or the first APL data from the memory 250 for the buffer of the memory 250.

The microcomputer 290 of the A/V reception device 200 outputs the second image frame through the display 260 based on the restored second APL data (step S423).

The microcomputer 290 of the A/V reception device 200 stores the second image data or the second APL data corresponding to the second image frame in the memory 250 (step S425).

This is to calculate the APL data of the third image frame when the abnormal state in the wireless quality is detected during reception of the third image frame following the second image frame.

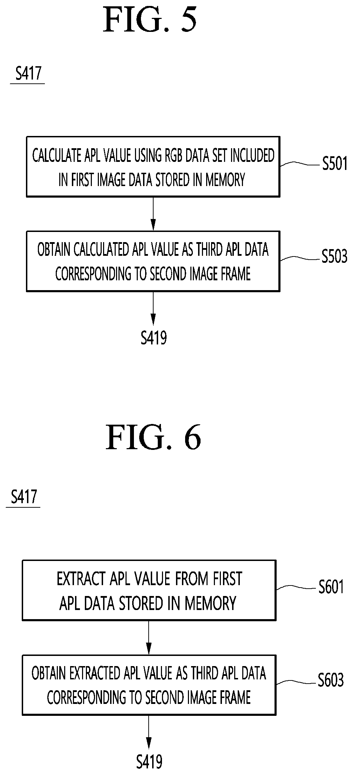

FIG. 5 is a diagram describing a process in which an A/V reception device obtains an APL value using image data when an abnormal condition in wireless quality is detected according to an embodiment of the present disclosure.

FIG. 5 is a diagram describing step S417 of FIG. 4 in detail.

Referring to FIG. 5, the microcomputer 290 of the A/V reception device 200 calculates an APL value using an RGB data set included in the first image data stored in the memory 250 (step S501).

In one embodiment, the RGB data set included in the first image data may include a plurality of RGB values corresponding to each of a plurality of pixels constituting the display panel.

The microcomputer 290 may calculate an average of the plurality of RGB values and obtain the calculated average value as an APL value.

In one embodiment, the first image data stored in the memory 250 may be compressed data. The microcomputer 290 may restore the compressed first image data through the restoration chip 280 and calculate the APL value from the restored first image data.

The microcomputer 290 obtains the calculated APL value as the third APL data corresponding to the second image frame (step S503).

In this way, according to the embodiment of the present disclosure, the A/V reception device 200 may display a stable image by generating the APL value on its own even in a situation where the wireless quality is poor.

FIG. 6 is a diagram describing a process in which an A/V reception device obtains an APL value using APL data when an abnormal state of the wireless quality is detected according to one embodiment of the present disclosure.

FIG. 6 is a diagram describing step S417 of FIG. 4 in detail.

Referring to FIG. 6, the microcomputer 290 of the A/V reception device 200 extracts the APL value from the first APL data stored in the memory 250 (step S601).

The first APL data may include an APL value of the first image frame and identification information identifying the first image frame. The identification information may be a time stamp corresponding to the first image frame.

The microcomputer 290 obtains the extracted APL value as the third APL data of the second image frame (step S603).

In this way, according to the embodiment of the present disclosure, the A/V reception device 200 may generate an APL value on its own even in a situation where the wireless quality is poor, thereby displaying a stable image.

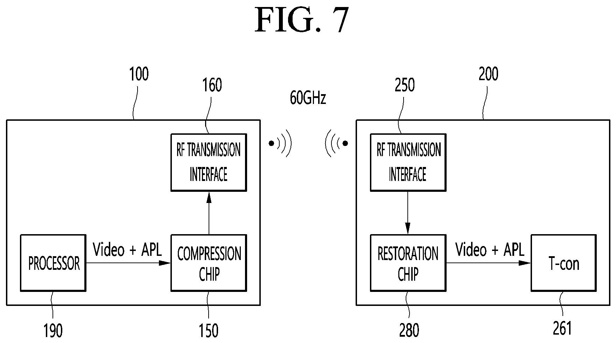

FIG. 7 is a diagram describing a process of transmitting image data and APL data in a wireless display system according to an embodiment of the present disclosure.

Referring to FIG. 7, the wireless display system 1 may include the A/V transmission device 100 and the A/V reception device 200.

The A/V transmission device 100 may generate image data and APL data, and transmit the generated image data and APL data to the compression chip 150.

The compression chip 150 may compress the image data and APL data to generate a packet, and transmit the generated packet to the RF transmission interface 160.

The RF transmission interface 160 may transmit the compressed packet to the RF reception interface 260 through an RF communication band.

The restoration chip 280 of the A/V reception device 200 may restore the compressed packet, and transmit the restored image data and APL data to the timing controller 261.

The timing controller 261 may generate a driving signal based on image data and APL data, and output an image frame on the display panel through the generated driving signal.

According to one embodiment of the present disclosure, the above-described method may be implemented as a code that may be read by a processor on a medium in which a program is recorded. Examples of the medium that may be read by a processor include a ROM, a RAM, a CD-ROM, a magnetic tape, a floppy disk, an optical data storage device, etc.

## Claims

1. A wireless reception device (200), comprising:
a display (260);
a memory (250);
a Radio Frequency, RF, reception interface (240) including a plurality of receiving antennas and configured to receive compressed image data from a wireless transmission device (100);
a restoration chip (280) configured to restore the compressed image data; and
a microcomputer (290) configured to:
based on an abnormal state of wireless quality between the wireless transmission device (100) and the wireless reception device (200) being detected, obtain a first average picture level, APL, value of the image data using previous image data or previous APL data stored in the memory (250) and display an image frame having the obtained first APL value on the display (260), and
based on an abnormal state of wireless quality between the wireless transmission device (100) and the wireless reception device (200) being not detected:
obtain a second APL value of current image data using the current image data or current APL data and display an image frame having the obtained second APL value,
delete a previous image data or a previous APL data previously stored from the memory (250), and
store the current image data or the current APL data corresponding to the image frame in the memory (250).

2. The device of claim 1,
wherein the previous image data includes a plurality of RGB values corresponding to each of a plurality of pixels constituting the display (260), and
wherein the microcomputer (290) is configured to obtain an average of the plurality of RGB values as the first APL value.

3. The device of claim 1,
wherein the previous image data is compressed data of a previous image frame received before displaying the image frame.

4. The device of claim 1,
wherein the previous APL data includes the first APL value of a previous image frame received before displaying the image frames.

5. The device of claim 1,
wherein the microcomputer (290) is configured to measure a signal noise ratio, SNR, and detect a state of the wireless quality as the abnormal state based on the measured SNR being less than a reference value.

6. The device of claim 1,
wherein the microcomputer (290) is configured to measure a received signal strength indicator, RSSI, and detect a state of the wireless quality as the abnormal state when the measured RSSI is less than a reference value.

## Patentansprüche

1. Drahtloses Empfangsgerät (200), umfassend:
ein Display (260);
einen Speicher (250);
eine Hochfrequenz-Empfangsschnittstelle (240) mit mehreren Empfangsantennen, die dazu eingerichtet sind, komprimierter Bilddaten von einem drahtlosen Übertragungsgerät (100) zu empfangen;
einen Wiederherstellungschip (280), der dazu eingerichtet ist, die komprimierten Bilddaten wiederherzustellen; und
einen Mikrocomputer (290), der eingerichtet ist zum:
auf der Grundlage, dass ein abnormaler Zustand der Funkqualität zwischen dem drahtlosen Übertragungsgerät (100) und dem drahtlosen Empfangsgerät (200) erkannt wird, Erlangen eines ersten durchschnittlichen Bildpegelwerts (average picture level - APL) der Bilddaten unter Verwendung vorheriger Bilddaten oder vorheriger APL-Daten, die in dem Speicher (250) gespeichert sind, und Anzeigen eines Bildrahmens mit dem ermittelten ersten APL-Wert auf dem Display (260), und
auf der Grundlage, dass ein abnormaler Zustand der Funkqualität zwischen dem drahtlosen Übertragungsgerät (100) und dem drahtlosen Empfangsgerät (200) nicht erkannt wird:
Erlangen eines zweiten APL-Werts der aktuellen Bilddaten unter Verwendung aktueller Bilddaten oder aktueller APL-Daten und Anzeigen eines Bildrahmens mit dem ermittelten zweiten APL-Wert auf dem Display (260),
Löschen vorheriger Bilddaten oder früherer APL-Daten, die zuvor in dem Speicher (250) gespeichert waren, und
Speichern der aktuellen Bilddaten oder der aktuellen APL-Daten, die dem Bildrahmen entsprechen, in dem Speicher (250).

2. Gerät nach Anspruch 1,
wobei die vorherigen Bilddaten eine Mehrzahl von RGB-Werten enthalten, die jedem einer Mehrzahl von Pixeln entsprechen, aus denen das Display (260) besteht, und
wobei der Mikrocomputer (290) dazu eingerichtet ist, einen Durchschnitt der Mehrzahl von RGB-Werte als ersten APL-Wert zu ermitteln.

3. Gerät nach Anspruch 1,
wobei die vorherigen Bilddaten komprimierte Daten eines vorherigen Bildrahmens sind, der vor dem Anzeigen des Bildrahmens empfangen wurde.

4. Gerät nach Anspruch 1,
wobei die vorherigen APL-Daten den ersten APL-Wert eines vorherigen Bildrahmens umfassen, der vor dem Anzeigen der Bildrahmen empfangen wurde.

5. Gerät nach Anspruch 1,
wobei der Mikrocomputer (290) dazu eingerichtet ist, ein Signal-RauschVerhältnis (signal noise ratio - SNR) zu Messen und einen Zustand der Funkqualität als den abnormalen Zustand zu erkennen, wenn das gemessene SNR unter einem Referenzwert liegt.

6. Gerät nach Anspruch 1,
wobei der Mikrocomputer (290) dazu eingerichtet ist, einen Empfangssignalstärkeindikator (received signal strength indicator - RSSI) zu messen und einen Zustand der Funkqualität als den abnormalen Zustand zu erkennen, wenn der gemessene RSSI unter einem Referenzwert liegt.

## Revendications

1. Dispositif de réception sans fil (200) comprenant:
un écran (260);
une mémoire (250);
une interface de réception radiofréquence, RF, (240) comprenant une pluralité d'antennes de réception et configurée pour recevoir des données d'image compressées provenant d'un dispositif de transmission sans fil (100);
une puce de restauration (280) configurée pour restaurer les données d'image compressées; et
un micro-ordinateur (290) configuré pour:
sur la base d'un état anormal de la qualité sans fil entre le dispositif de transmission sans fil (100) et le dispositif de réception sans fil (200) détecté, obtenir une première valeur moyenne de niveau d'image, APL, des données d'image à l'aide de données d'image précédentes ou de données APL précédentes stockées dans la mémoire (250) et afficher une trame d'image ayant la première valeur APL obtenue sur l'écran (260), et
sur la base d'un état anormal de la qualité sans fil entre le dispositif de transmission sans fil (100) et le dispositif de réception sans fil (200) non détecté:
obtenir une seconde valeur APL des données d'image actuelles à l'aide des données d'image actuelles ou des données APL actuelles et afficher une trame d'image ayant la seconde valeur APL obtenue,
supprimer les donnée d'image précédentes ou les données APL précédentes précédemment stockées dans la mémoire (250), et
stocker les données d'image actuelles ou les données APL actuelles correspondant à la trame d'image dans la mémoire (250).

2. Dispositif selon la revendication 1,
dans lequel les données d'image précédentes comprennent une pluralité de valeurs RVB correspondant à chaque pixel d'une pluralité de pixels constituant l'affichage (260), et
dans lequel le micro-ordinateur (290) est configuré pour obtenir une moyenne de la pluralité de valeurs RVB en tant que première valeur APL.

3. Dispositif selon la revendication 1,
dans lequel les données d'image précédentes sont des données compressées d'une trame d'image précédente reçue avant l'affichage de la trame d'image.

4. Dispositif selon la revendication 1,
dans lequel les données APL précédentes comprennent la première valeur APL d'une trame d'image précédente reçue avant l'affichage des trames d'image.

5. Dispositif selon la revendication 1,
dans lequel le micro-ordinateur (290) est configuré pour mesurer un rapport signal/bruit, SNR, et détecter un état de la qualité sans fil comme étant un état anormal sur la base du SNR mesuré qui est inférieur à une valeur de référence.

6. Dispositif selon la revendication 1,
dans lequel le micro-ordinateur (290) est configuré pour mesurer un indicateur de la puissance du signal reçu, RSSI, et détecter un état de la qualité sans fil comme étant un état anormal lorsque le RSSI mesuré est inférieur à une valeur de référence.
